# FASCICULE DE BREVET EUROPEEN

(11) **EP 1 793 911 B1**
(45) Date de publication et mention de la délivrance du brevet: **19.03.2008**
(21) Numéro de dépôt: 05800576.0
(22) Date de dépôt: 29.09.2005
(51) Int. Cl.: B01D 46/52, B60H 3/06

(54) **DISPOSITIF DE FILTRATION D'AIR, PROCEDE ET DISPOSITIF POUR SA FABRICATION ET INSTALLATION DE CIRCULATION D'AIR DANS UN VEHICULE AUTOMOBILE**
LUFTFILTERVORRICHTUNG, VERFAHREN UND VORRICHTUNG ZU IHRER HERSTELLUNG UND LUFTZIRKULATIONSSYSTEM FÜR EIN KRAFTFAHRZEUG
AIR-FILTERING DEVICE, METHOD AND DEVICE FOR THE PRODUCTION THEREOF AND AN AIR CIRCULATION SYSTEM FOR A MOTOR VEHICLE

(30) Priorité: 29.09.2004 FR 0452194
(43) Date de publication de la demande: 13.06.2007
(73) Titulaire: Valeo Matériaux de Friction, 87020 Limoges (FR)
(72) Inventeur: KLOSSEK, Robert, F-14700 FALAISE (FR); LEBRETON, Sébastien, F-61100 FLERS (FR); BISSON, Laurent, F-14110 CONDE SUR NOIREAU (FR)
(86) Numéro de dépôt international: PCT/FR2005/050797
(87) Numéro de publication internationale: WO 2006/035189

(56) Documents cités:
- EP-A- 1 129 760
- EP-A- 1 431 090
- WO-A-98/20961
- DE-A1- 19 718 603
- GB-A- 2 070 965
- US-A- 5 531 892
- US-A- 6 162 272
- US-B1- 6 706 087
- PATENT ABSTRACTS OF JAPAN vol. 1999, no. 01, 29 janvier 1999 (1999-01-29) & JP 10 263348 A (TOYO ROKI SEIZO KK), 6 octobre 1998 (1998-10-06)

## Description

La présente invention concerne un dispositif de filtration d'air, un procédé et un dispositif pour sa fabrication et une installation de circulation d'air dans un véhicule automobile.

On connaît déjà dans l'état de la technique un dispositif de filtration d'air, du type comprenant un cadre de canalisation d'air destiné à être logé dans un boîtier de canalisation d'air, le cadre portant un média filtrant et comprenant au moins une paroi de canalisation de l'air délimitée par une surface interne de jonction avec le média filtrant et une surface externe destinée à coopérer avec une paroi complémentaire du boîtier.

Dans le cas particulier d'une installation de circulation d'air dans un véhicule automobile, le boîtier de logement du dispositif de filtration est agencé dans le corps du véhicule.

Le cadre comporte généralement au moins deux parois de canalisation de l'air entre lesquelles s'étend le média filtrant.

Habituellement, un dispositif de filtration du type précité est équipé de moyens d'étanchéité entre le cadre de canalisation de d'air et le boîtier qui le reçoit.

EP-A-0 961 702 décrit un dispositif de filtration d'air, du type précité, dans lequel les parois du cadre sont fabriquées en matériau synthétique déformable élastiquement, notamment en mousse de polypropylène. Les parois du cadre assurent, en se déformant par compression, l'étanchéité entre ce cadre et le boîtier, ceci sans nécessiter de moyens d'étanchéité supplémentaires. Si l'on considère deux parois du cadre et du boîtier en contact l'une avec l'autre, c'est pratiquement la totalité de la surface externe de la paroi du cadre qui est en contact avec pratiquement la totalité de la surface interne de la paroi complémentaire du boîtier.

Or, une étanchéité de qualité requiert un bon contact entre, d'une part, les parois déformables du cadre et, d'autre part, les parois complémentaires du boîtier. Il convient donc que les cotes du cadre de canalisation de l'air et du boîtier soient précises. Le cadre doit donc être fabriqué par un procédé relativement élaboré et coûteux garantissant la précision de cote requise.

Par ailleurs, l'effort requis pour insérer le cadre dans le boîtier est relativement important car il convient de vaincre les forces de frottement en jeu. Cet effort peut entraîner des déformations indésirables des parois du cadre et donc des défauts d'étanchéité entre le cadre de canalisation de d'air et le boîtier qui le reçoit.

L'invention a notamment pour but de faciliter le montage du cadre de canalisation de d'air dans le boîtier, ceci en garantissant une bonne étanchéité entre le cadre et le boîtier.

A cet effet, l'invention a pour objet un dispositif de filtration d'air, du type précité, où la surface externe de la paroi de canalisation comporte une saillie, venue de matière avec cette paroi de canalisation, destinée à venir en contact avec la paroi complémentaire du boîtier pour former un joint d'étanchéité entre la cadre de canalisation de l'air et le boîtier, et la surface interne de la paroi de canalisation comporte un enfoncement sensiblement complémentaire à ladite saillie.

La surface de contact d'une paroi du cadre avec le boîtier est limitée à la surface de contact de la saillie avec la paroi complémentaire du boîtier. De ce fait, lors de l'introduction du cadre dans le boîtier, les frottements entre les parois du cadre et les parois complémentaires du boîtier sont relativement limités, ce qui évite les déformations indésirables de ce cadre.

Par ailleurs, la saillie d'étanchéité du dispositif de filtration d'air selon l'invention, venue de matière avec la paroi du cadre, permet d'optimiser le procédé de fabrication de ce dispositif de filtration. En effet, il n'est pas nécessaire de limiter sévèrement les éventuels écarts de cotes du cadre et du boîtier. De plus, on évite d'avoir à rapporter les moyens d'étanchéité sur le cadre et d'avoir à transformer de façon conséquente les installations et dispositifs de fabrication classiques.

En outre le fait que la surface interne de la paroi de canalisation comporte un enfoncement sensiblement complémentaire à la saillie d'étanchéité permet de donner une certaine souplesse à ladite paroi et ainsi de faciliter son introduction dans le cadre du boîtier, tout en offrant un bon contact avec le cadre après mise en place.

Il convient de noter que la présence de l'enfoncement sensiblement complémentaire à la saillie d'étanchéité peut être obtenue avantageusement à partir d'une bande matériau parallélépipédique après déformation de ladite bande dans la zone souhaitée.

On obtient alors un gain de matière significatif par rapport à des solutions où un joint est ajouté à une bande parallélépipédique pour former étanchéité avec le cadre du boîtier.

Suivant d'autres caractéristiques optionnelles de ce dispositif de filtration d'air :
- la paroi de canalisation de l'air est en polymère thermodéformable, notamment en mousse synthétique de polypropylène, polyester, polyéthylène ou polyuréthane ;
- la paroi de canalisation de l'air a une épaisseur sensiblement constante comprise entre 2 et 10 mm, de préférence entre 3 et 5 mm ;
- la paroi de canalisation de l'air a une masse volumique inférieure à 200 kg/m³, de préférence comprise entre 20 et 100 kg/m³ ;
- la paroi de canalisation de l'air a une résistance à la compression inférieure à 500 kPa, de préférence comprise entre 50 et 200 kPa ;
- la paroi de canalisation de l'air a une forme générale plane délimitée par un contour de forme sensiblement rectangulaire, la saillie d'étanchéité ayant une forme générale rectiligne s'étendant sensiblement parallèlement aux grands côtés de la paroi de canalisation de l'air.

L'invention a également pour objet une installation de circulation d'air dans un véhicule automobile, qui comprend un dispositif de filtration tel que défini ci-dessus.

Suivant une caractéristique optionnelle de cette installation, celle-ci approvisionne un habitacle du véhicule en air climatisé ou non.

L'invention a encore pour objet un dispositif pour la fabrication d'un dispositif de filtration d'air tel que défini ci-dessus, du type comprenant une plaque d'appui délimitée par une surface d'appui de la surface externe de la paroi de canalisation de l'air, où la surface d'appui de la plaque d'appui comporte un enfoncement de forme complémentaire de la saillie d'étanchéité de la paroi de canalisation d'air, cet enfoncement étant raccordé à des moyens destinés à créer du vide entre la surface d'appui de la plaque d'appui et la surface externe de la paroi de canalisation de l'air.

Suivant des caractéristiques optionnelles de différents modes de réalisation de ce dispositif de fabrication :
- le dispositif de fabrication comprend une plaque chauffante délimitée par une surface de contact avec la surface interne de la paroi de canalisation de l'air, la paroi de canalisation de l'air étant destinée à être enserrée entre les plaques d'appui et chauffante, la surface de contact de la plaque chauffante comportant une saillie sensiblement complémentaire de l'enfoncement de la surface d'appui de la plaque d'appui pour la mise en forme la saillie d'étanchéité de la paroi de canalisation d'air ;
- le dispositif de fabrication comprend une lampe, notamment au néon, émettant un rayonnement infra-rouge destiné au chauffage de la surface interne de la paroi de canalisation de l'air.

L'invention a encore pour objet un procédé de fabrication d'un dispositif de filtration d'air tel que défini ci-dessus, mis en oeuvre par un dispositif de fabrication tel que défini ci-dessus, qui comprend au moins les étapes suivantes :
- on chauffe la surface interne de la paroi de canalisation de l'air jusqu'à une température comprise entre 240 et 300°C,
- on crée localement du vide entre la surface d'appui de la plaque d'appui et la surface externe de la paroi de canalisation de l'air pour former la saillie d'étanchéité.

Suivant des caractéristiques optionnelles de différents modes de réalisation de ce procédé :
- le vide créé entre la surface d'appui de la plaque d'appui et la surface externe de la paroi de canalisation de l'air peut atteindre, voire dépasser, - 80 kPa ;
- on chauffe la surface interne de la paroi de canalisation de l'air par contact avec la plaque chauffante pendant 2 à 7 s ;
- le rayonnement infra-rouge émis par la lampe est diffusé vers la surface interne de la paroi de canalisation de l'air pendant 1 à 4 s et avec une puissance telle que la puissance reçue par surface interne de la paroi de canalisation de l'air soit comprise entre 60 et 200 W/cm de longueur de saillie d'étanchéité, de préférence égale à 120 W/cm de longueur de saillie d'étanchéité.

L'invention sera mieux comprise à la lecture de la description qui va suivre, donnée uniquement à titre d'exemple et faite en se référant aux dessins dans lesquels :
- la figure 1 est une vue en perspective d'un dispositif de filtration selon l'invention ;
- la figure 2 est une vue en coupe du dispositif de filtration représenté sur la figure 1 ;
- la figure 3 est une vue en coupe d'un dispositif de soudage selon un premier mode de réalisation de l'invention ;
- la figure 4 est une vue en coupe d'un dispositif de soudage selon un second mode de réalisation de l'invention.

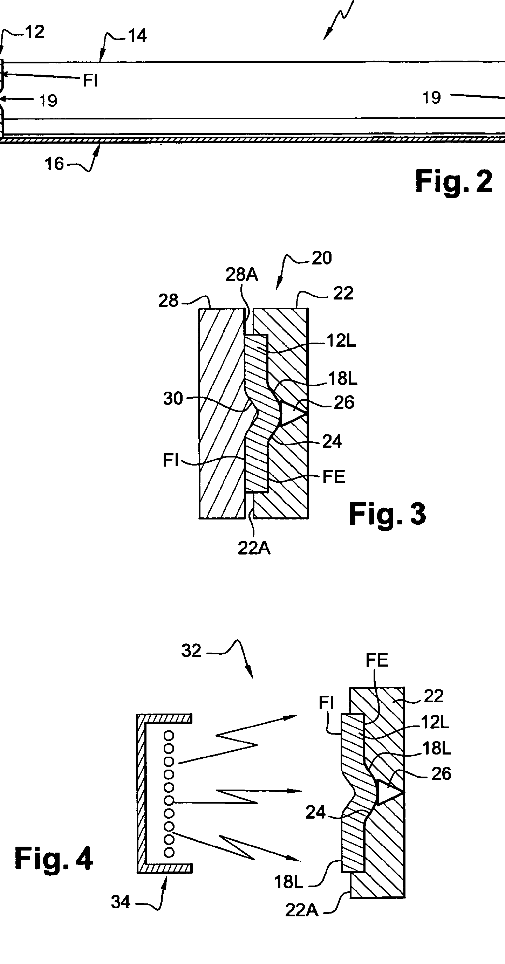

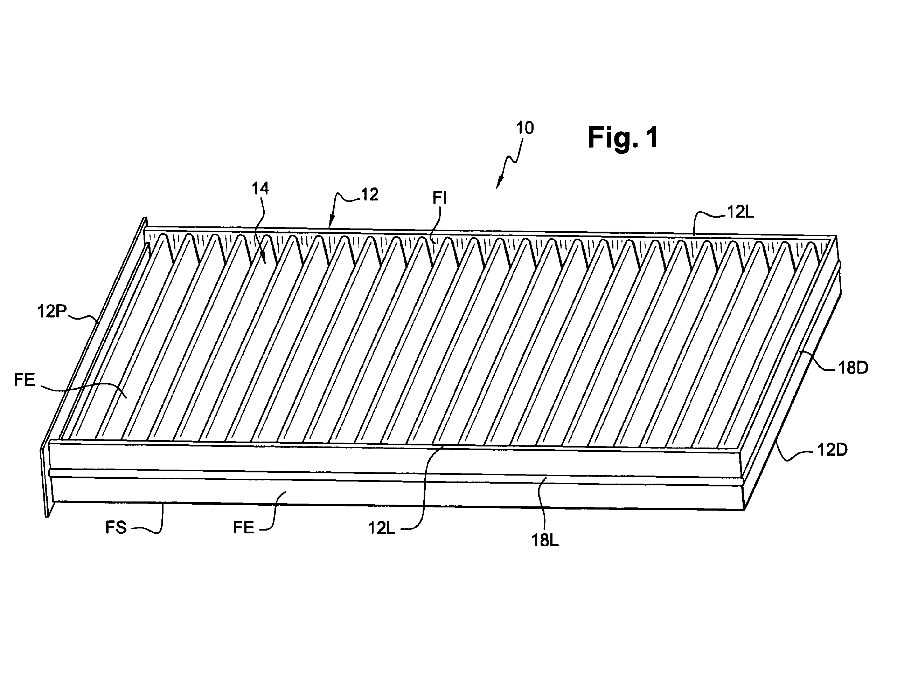

On a représenté sur les figures 1 et 2 un dispositif de filtration d'air selon l'invention, désigné par la référence générale 10.

Le dispositif de filtration 10 est destiné par exemple à être agencé dans une installation de circulation d'air dans un véhicule automobile afin notamment d'approvisionner un habitacle de ce véhicule en air climatisé ou non.

Le dispositif de filtration 10 comprend un cadre 12 de canalisation de l'air, portant un média filtrant 14, de type classique, par exemple tel que décrit dans FR-A-2 779 662 (FR-98 07 273) ou FR-A-2 772 670 (FR-97 16 262). Le média filtrant 14 comprend, dans l'exemple illustré, un matériau multicouche plié en accordéon, porté le cas échéant par des grilles non représentées.

Le cadre 12 est destiné à être logé dans un boîtier classique 16 de canalisation d'air par emboîtement dans un siège passant donnant accès à ce boîtier 16.

Le cadre 12, de forme générale prismatique aplatie, comporte des côtés délimités par quatre parois de canalisation d'air, à savoir deux parois opposées dites proximale 12P et distale 12D, reliées entre elles par deux parois opposées latérales 12L.

Le cadre 12 délimite deux faces passantes opposées respectivement d'entrée FE et de sortie FS d'air.

Chaque paroi 12P, 12D, 12L du cadre a une forme générale plane délimitée par un contour de forme sensiblement rectangulaire. Le bord de la paroi proximale 12P délimite un épaulement d'appui du cadre 12 sur le siège passant sur lequel le cadre 12 est destiné à être fixé. Les deux parois latérales 12L sont sensiblement parallèles à la direction d'emboîtement du cadre 12 dans le siège passant.

Le cadre 12 est fabriqué en polymère. De préférence, les parois distale 12D et latérales 12L sont fabriquées en polymère thermodéformable, plus particulièrement en mousse synthétique de polypropylène, polyester, polyéthylène ou polyuréthane, afin notamment de pouvoir être fabriquées conformément aux procédés qui seront décrits par la suite.

Les surfaces distale 12D et latérales 12L sont délimitées chacune par une surface interne FI de jonction avec le média filtrant 14 et une surface externe FE destinée à coopérer avec une paroi complémentaire BI du boîtier 16.

La surface externe FE de chacune des parois distale 12D et latérales 12L comporte une saillie 18D, 18L, venue de matière avec la paroi correspondante 12D, 12L, destinée à venir en contact avec la paroi complémentaire BI du boîtier pour former un joint d'étanchéité entre le cadre 12 et le boîtier 16, comme cela est représenté sur la figure 2.

Dans l'exemple illustré, chaque saillie d'étanchéité 18D, 18L a une forme générale rectiligne s'étendant sensiblement parallèlement aux grands côtés de la paroi correspondante 12D, 12L.

La surface interne FI de la paroi de canalisation 12D, 12L comporte un enfoncement 19 sensiblement complémentaire à la saillie d'étanchéité 18D, 18L.

Le matériau dans lequel sont fabriquées les parois distale 12D et latérales 12L est déformable élastiquement. Afin que la déformation de chaque saillie 18D, 18L assure une étanchéité efficace, la masse volumique des parois distale 12D et latérales 12L est inférieure à 200 kg/m³, de préférence comprise entre 20 et 100 kg/m³. Par ailleurs, la résistance à la compression du matériau dans lequel sont formées les parois distale 12D et latérales 12L est inférieure à 500 kPa, de préférence comprise entre 50 et 200 kPa. On définit la résistance à la compression suivant la Norme ISO 844 pour un écrasement relatif de 10%. Enfin, l'épaisseur des parois distale 12D et latérales 12L est comprise entre 2 et 10 mm, de préférence entre 3 et 5 mm.

Conformément à un premier exemple, les parois distale 12D et latérales 12L sont chacune en polypropylène et ont chacune une épaisseur de 3 mm, une masse volumique de 67 kg/m³ et une résistance à la compression de 159 kPa.

Conformément à un second exemple, les parois distale 12D et latérales 12L sont chacune en polypropylène et ont une épaisseur de 5 mm, une masse volumique de 40 kg/m³ et une résistance à la compression de 75 kPa.

La paroi proximale 12P du cadre peut être fabriquée dans un matériau similaire à celui des autres parois 12D, 12L du cadre ou dans un matériau plus rigide que celui de ces autres parois 12D, 12L.

On a représenté sur la figure 3 un dispositif, selon un premier mode de réalisation de l'invention, pour fabriquer le dispositif de filtration d'air 10. Ce dispositif de fabrication est désigné par la référence générale 20.

Le dispositif de fabrication 20 comprend une plaque d'appui 22 délimitée par une surface 22A d'appui de la surface externe FE d'une paroi du cadre, en particulier une paroi latérale 12L de ce cadre, comme cela est représenté sur la figure 3.

La surface d'appui 22A comporte un enfoncement 24 de forme complémentaire de la saillie d'étanchéité 18L de la paroi latérale 12L.

L'enfoncement 24 est raccordé à des moyens classiques 26 destinés à créer du vide entre la surface d'appui 22A de la plaque 22 et la surface externe FE de la paroi latérale 18L de canalisation de l'air.

Le dispositif de fabrication 20 selon le premier mode de réalisation de l'invention permet, d'une part, de lier le média filtrant 14 aux parois distale 12D, latérales 12L et, le cas échéant, proximale 12P du cadre 12 par une opération de soudage thermique. Cette opération, qui se fait sans apport de matière, permet de souder la face interne FI des parois 12D, 12L avec une surface de jonction complémentaire du média filtrant 14.

Plus particulièrement, le dispositif 20 selon le premier mode de réalisation de l'invention permet de réaliser une opération de soudage miroir au cours de laquelle la face interne FI de chaque paroi distale 12D et longitudinale 12L est chauffée par contact avec une plaque chauffante 28.

La plaque chauffante 28 est délimitée par une surface 28A de contact avec la surface interne FI de la paroi de canalisation de l'air correspondante, à savoir la paroi latérale 12L dans l'exemple de la figure 3. Sur cette figure 3, on voit que la paroi latérale 12L est enserrée entre les plaques d'appui 22 et chauffante 28. La surface de contact 28A de la plaque chauffante comporte une saillie 30 sensiblement complémentaire de l'enfoncement 24 de la surface d'appui 22A de la plaque d'appui. La saillie 30 est destinée à mettre en forme la saillie d'étanchéité 24 de la paroi 12L de canalisation d'air.

Le dispositif de filtration d'air 10 est susceptible d'être fabriqué au moyen du dispositif de fabrication 20 conformément aux étapes de procédé précisées ci-dessous.

On chauffe la surface interne FI de la paroi de canalisation de l'air correspondante, à savoir la paroi latérale 12L dans le cas de la figure 3, jusqu'à une température comprise entre 240 et 300°C. De préférence, on chauffe la surface interne FI de la paroi 12L par contact avec la plaque chauffante 28 pendant 2 à 7 secondes.

Pendant le chauffage, on crée localement du vide entre la surface d'appui 22A de la plaque d'appui 22 et la surface externe FE de la paroi latérale 12L pour faciliter la formation de la saillie d'étanchéité 18L. De préférence, le vide créé peut atteindre, voire dépasser, - 80 kPa.

On a représenté sur la figure 4 un dispositif selon un second mode de réalisation de l'invention pour fabriquer le dispositif de filtration d'air 10. Ce dispositif de fabrication est désigné par la référence générale 32.

Sur la figure 4, les éléments analogues à ceux de la figure 3 sont désignés par des références identiques.

Dans le cas du second mode de réalisation, le dispositif de fabrication 32 permet de réaliser l'opération de soudage thermique du cadre 12 et du média filtrant 14 au moyen d'un rayonnement infrarouge. Au cours d'une opération de soudage de ce type, la face interne FI de chaque paroi 12D, 12L est chauffée par le rayonnement infrarouge émis par une lampe 34, par exemple une lampe au néon.

La lampe 34 remplace donc la plaque chauffante 28 du dispositif de fabrication 20 selon le premier mode de réalisation de l'invention.

Le dispositif de filtration d'air 10 est susceptible d'être fabriqué au moyen du dispositif de fabrication 32 conformément aux étapes de procédé précisées ci-dessous.

Comme avec le dispositif de fabrication 20 selon le premier mode de réalisation de l'invention, on chauffe la surface interne FI de la paroi de canalisation de l'air correspondante, à savoir la paroi latérale 12L dans le cas de la figure 4.

Toutefois, dans ce cas, on chauffe la surface interne FI de la paroi 12L de canalisation de l'air de préférence dans les conditions ci-dessous.

Le rayonnement infrarouge est diffusé vers la surface interne FI de la paroi 12L pendant 1 à 4 secondes et avec une puissance telle que la puissance reçue par cette surface interne FI soit comprise entre 60 et 200 W/cm de longueur de saillie d'étanchéité 18L, par exemple égale à 120 W/cm de longueur de saillie d'étanchéité 18L.

Comme avec le dispositif de fabrication 20 selon le premier mode de réalisation de l'invention, pendant le chauffage, on crée localement du vide entre la surface d'appui 22A de la plaque d'appui 22 et la surface externe FE de la paroi latérale 12L pour former la saillie d'étanchéité 18L.

Parmi les avantages de l'invention, on notera que les saillies d'étanchéité 18D, 18L, venues de matière avec les parois correspondantes 12D, 12L du cadre, coopèrent avec les parois complémentaires BI du boîtier 16 en assurant une étanchéité efficace. L'aptitude à la compression des saillies d'étanchéité 18D, 18L permet de rattraper les éventuelles dérives de cotes du cadre 12 et du boîtier 16.

## Revendications

1. Dispositif de filtration d'air, du type comprenant un cadre (12) de canalisation d'air destiné à être logé dans un boîtier (16) de canalisation d'air, le cadre (12) portant un média filtrant (14) et comprenant au moins une paroi de canalisation de l'air (12D, 12L) délimitée par une surface interne (FI) de jonction avec le média filtrant (14) et une surface externe (FE) destinée à coopérer avec une paroi complémentaire (BI) du boîtier (16), **caractérisé en ce que** la surface externe (FE) de la paroi de canalisation (12D, 12L) du cadre (12) comporte une saillie (18D, 18L), venue de matière avec cette paroi de canalisation (12D, 12L) du cadre (12), destinée à venir en contact avec la paroi complémentaire (BI) du boîtier (16) pour former un joint d'étanchéité entre la cadre (12) de canalisation de l'air et le boîtier (16), et **en ce que** la surface interne (FI) de la paroi de canalisation (12D, 12L) comporte un enfoncement (19) sensiblement complémentaire à ladite saillie (18D, 18L).

2. Dispositif selon la revendication 1, **caractérisé en ce que** la paroi de canalisation de l'air (12D, 12L) est en polymère thermodéformable, notamment en mousse synthétique de polypropylène, polyester, polyéthylène ou polyuréthane.

3. Dispositif selon la revendication 1 ou 2, **caractérisé en ce que** la paroi de canalisation de l'air (12D, 12L) a une épaisseur sensiblement constante comprise entre 2 et 10 mm, de préférence entre 3 et 5 mm.

4. Dispositif selon l'une quelconque des revendications précédentes, **caractérisé en ce que** la paroi de canalisation de l'air (12D, 12L) a une masse volumique inférieure à 200 kg/m³, de préférence comprise entre 20 et 100 kg/m³.

5. Dispositif selon l'une quelconque des revendications précédentes, **caractérisé en ce que** la paroi de canalisation de l'air (12D, 12L) a une résistance à la compression inférieure à 500 kPa, de préférence comprise entre 50 et 200 kPa.

6. Dispositif selon l'une quelconque des revendications précédentes, **caractérisé en ce que** la paroi de canalisation de l'air (12D, 12L) a une forme générale plane délimitée par un contour de forme sensiblement rectangulaire, la saillie d'étanchéité (18D, 18L) ayant une forme générale rectiligne s'étendant sensiblement parallèlement aux grands côtés de la paroi de canalisation de l'air (12D, 12L).

7. Installation de circulation d'air dans un véhicule automobile, **caractérisée en ce qu'elle** comprend un dispositif de filtration (10) selon l'une quelconque des revendications précédentes.

8. Installation selon la revendication 7, **caractérisée en ce qu'**elle approvisionne un habitacle du véhicule en air climatisé ou non.

9. Dispositif (20 ; 32) pour la fabrication d'un dispositif de filtration d'air selon l'une quelconque des revendications 1 à 6, du type comprenant une plaque d'appui (22) délimitée par une surface d'appui (22A) de la surface externe (FE) de la paroi de canalisation de l'air (12D, 12L), **caractérisé en ce que** la surface d'appui (22A) de la plaque d'appui (22) comporte un enfoncement (24) de forme complémentaire de la saillie d'étanchéité (18D, 18L) de la paroi de canalisation d'air (12D, 12L), cet enfoncement (24) étant raccordé à des moyens (26) destinés à créer du vide entre la surface d'appui (22A) de la plaque d'appui (22) et la surface externe (FE) de la paroi de canalisation de l'air (12D, 12L).

10. Dispositif (20) selon la revendication 9, **caractérisé en ce qu'**il comprend une plaque chauffante (28) délimitée par une surface (28A) de contact avec la surface interne (FI) de la paroi de canalisation de l'air (12D, 12L), la paroi de canalisation de l'air (12D, 12L) étant destinée à être enserrée entre les plaques d'appui (22) et chauffante (28), la surface de contact (28A) de la plaque chauffante (28) comportant une saillie (30) sensiblement complémentaire de l'enfoncement (24) de la surface d'appui (22A) de la plaque d'appui (22) pour la mise en forme de la saillie d'étanchéité (18D, 18L) de la paroi de canalisation d'air (12D, 12L).

11. Dispositif (32) selon la revendication 9, **caractérisé en ce qu'**il comprend une lampe (34), notamment au néon, émettant un rayonnement infra-rouge destiné au chauffage de la surface interne (FI) de la paroi de canalisation de l'air (12D, 12L).

12. Procédé de fabrication d'un dispositif de filtration d'air selon l'une quelconque des revendications 1 à 6, mis en oeuvre par un dispositif de fabrication (20 ; 32) selon la revendication 10 ou 11, **caractérisé en ce que :**
- on chauffe la surface interne (FI) de la paroi de canalisation de l'air (12D, 12L) jusqu'à une température comprise entre 240 et 300°C,
- on crée localement du vide entre la surface d'appui (22A) de la plaque d'appui (22) et la surface externe (FE) de la paroi de canalisation de l'air (12D, 12L) pour former la saillie d'étanchéité (18D, 18L).

13. Procédé selon la revendication 12, **caractérisé en ce que** le vide créé entre la surface d'appui (22A) de la plaque d'appui (22) et la surface externe (FE) de la paroi de canalisation de l'air (12D, 12L) peut atteindre, voire dépasser, - 80 kPa.

14. Procédé selon la revendication 12 ou 13 mis en oeuvre par un dispositif de fabrication (20) selon la revendication 10, **caractérisé en ce que** l'on chauffe la surface interne (FI) de la paroi de canalisation de l'air (12D, 12L) par contact avec la plaque chauffante (28) pendant 2 à 7 s.

15. Procédé selon la revendication 12 ou 13 mis en oeuvre par un dispositif (32) selon la revendication 11 pour la fabrication d'un dispositif de filtration d'air (10) selon la revendication 6, **caractérisé en ce que** le rayonnement infra-rouge émis par la lampe (34) est diffusé vers la surface interne (FI) de la paroi de canalisation de l'air (12D, 12L) pendant 1 à 4 s et avec une puissance telle que la puissance reçue par surface interne (FI) de la paroi de canalisation de l'air (12D, 12L) soit comprise entre 60 et 200 W/cm de longueur de saillie d'étanchéité (18D, 18L), de préférence égale à 120 W/cm de longueur de saillie d'étanchéité (18D, 18L).

## Claims

1. Air filtering device, of the type comprising an air-channelling frame (12), which is designed to be accommodated in an air-channelling case (16), the frame (12) bearing a filtering medium (14) and comprising at least one air-channelling wall (12D, 12L) which is delimited by an inner surface (FI) for joining with the filtering medium (14), and an outer surface (FE) which is designed to cooperate with a complementary wall (BI) of the case (16), **characterised in that** the outer surface (FE) of the channelling wall (12D, 12L) of the frame (12) comprises a projection (18D, 18L) which is integral with this channelling wall (12D, 12L) of the frame (12), and is designed to come into contact with the complementary wall (BI) of the case (16) in order to form a seal between the air-channelling frame (12) and the case (16), and **in that** the inner surface (FI) of the channelling wall (12D, 12L) comprises a recess (19) which is substantially complementary to the said projection (18D, 18L).

2. Device according to claim 1, **characterised in that** the air-channelling wall (12D, 12L) is made of thermally deformable polymer, and in particular from synthetic polypropylene, polyester, polyethylene or polyurethane foam.

3. Device according to claim 1 or claim 2, **characterised in that** the air-channelling wall (12L, 12L) has a substantially constant thickness of between 2 and 10 mm, and preferably between 3 and 5 mm.

4. Device according to any one of the preceding claims, **characterised in that** the air-channelling wall (12D, 12L) has a density of less than 200 kg/m³, and preferably of between 20 and 100 kg/m³.

5. Device according to any one of the preceding claims, **characterised in that** the air-channelling wall (12D, 12L) has a resistance to compression of less than 500 kPa, and preferably of between 50 and 200 kPa.

6. Device according to any one of the preceding claims, **characterised in that** the air-channelling wall (12D, 12L) has a generally flat form which is delimited by a contour with a substantially rectangular form, the sealing projection (18D, 18L) having a generally straight form which extends substantially parallel to the large sides of the air-channelling wall (12D, 12L).

7. Installation for circulation of air in a motor vehicle, **characterised in that** it comprises a filtering device (10) according to any one of the preceding claims.

8. Installation according to claim 7, **characterised in that** it supplies a passenger space of the vehicle with air which is or is not conditioned.

9. Device (20; 32) for the production of an air-filtering device according to any one of claims 1 to 6, of the type comprising a support plate (22) which is delimited by a support surface (22A) for the outer surface (FE) of the air-channelling wall (12D, 12L), **characterised in that** the support surface (22A) of the support plate (22) comprises a recess (24) with a form which is complementary to the sealing projection (18D, 18L) of the air-channelling wall (12D, 12L), this recess (24) being connected to means (26) which are designed to create a vacuum between the support surface (22A) of the support plate (22) and the outer surface (FE) of the air-channelling wall (12D, 12L).

10. Device (20) according to claim 9, **characterised in that** it comprises a heating plate (28) which is delimited by a surface (28A) of contact with the inner surface (FI) of the air-channelling wall (12D, 12L), the air-channelling wall (12D, 12L) being designed to be clamped between the support plate (22) and the heating plate (28), the contact surface (28A) of the heating plate (28) comprising a projection (30) which is substantially complementary to the recess (24) in the support surface (22A) of the support plate (22), for forming of the sealing projection (18D, 18L) of the air-channelling wall (12D, 12L).

11. Device (32) according to claim 9, **characterised in that** it comprises a lamp (34), and in particular a neon lamp, which emits infra-red radiation which is designed to heat the inner surface (FI) of the air-channelling wall (12D, 12L).

12. Method for production of an air-filtering device according to any one of claims 1 to 6, implemented by a production device (20; 32) according to claim 10 or 11, **characterised in that**:
- the inner surface (FI) of the air-channelling wall (12D, 12L) is heated to a temperature of between 240 and 300°C; and
- a vacuum is created locally between the support surface (22A) of the support plate (22) and the outer surface (FE) of the air-channelling wall (12D, 12L) in order to form the sealing projection (18D, 18L).

13. Method according to claim 12, **characterised in that** the vacuum which is created between the support surface (22A) of the support plate (22) and the outer surface (FE) of the air-channelling wall (12D, 12L) can be as much as 80 kPa, or more.

14. Method according to claim 12 or 13, implemented by a production device (20) according to claim 10, **characterised in that** the inner surface (FI) of the air-channelling wall (12D, 12L) is heated by contact with the heating plate (28) for 2 to 7 s.

15. Method according to claim 12 or 13, implemented by a device (32) according to claim 11, for production of an air-filtering device (10) according to claim 6, **characterised in that** the infra-red radiation which is emitted by the lamp (34) is diffused towards the inner surface (FI) of the air-channelling wall (12D, 12L) for 1 to 4 s, and with power such that the power received by the inner surface (FI) of the air-channelling wall (12D, 12L) is between 60 and 200 W/cm of length of sealing projection (18D, 18L), and preferably equal to 120 W/cm of length of sealing projection (18D, 18L).

## Patentansprüche

1. Luftfiltervorrichtung mit einem Luftkanalisierungsrahmen (12), der zur Aufnahme in einem Luftkanalisierungsgehäuse (16) bestimmt ist, wobei der Rahmen (12) ein Filtermedium (14) trägt und wenigstens eine Luftkanalisierungswand (12D, 12L) umfasst, die durch eine Innenfläche (FI) zum Anschluss an das Filtermedium (14) und eine Außenfläche (FE) begrenzt wird, die für das Zusammenwirken mit einer komplementären Wand (B1) des Gehäuses (16) bestimmt ist, **dadurch gekennzeichnet, dass** die Außenfläche (FE) der Kanalisierungswand (12D, 12L) des Rahmens (12) einen einstückig an dieser Kanalisierungswand (12D, 12L) des Rahmens (12) angeformten Vorsprung (18D, 18L) umfasst, der dazu bestimmt ist, mit der komplementären Wand (BI) des Gehäuses (16) in Kontakt zu kommen, um eine Dichtung zwischen dem Luftkanalisierungsrahmen (12) und dem Gehäuse (16) zu bilden, und dass die Innenfläche (FI) der Kanalisierungswand (12D, 12L) eine mit dem besagten Vorsprung (18D, 18L) in etwa komplementäre Eintiefung (19) umfasst.

2. Vorrichtung nach Anspruch 1, **dadurch gekennzeichnet, dass** die Luftkanalisierungswand (12D,12L) aus warmverformbarem Polymer, insbesondere aus synthetischem Polypropylen-, Polyester-, Polyethylen- oder Polyurethanschaum, besteht.

3. Vorrichtung nach Anspruch 1 oder 2, **dadurch gekennzeichnet, dass** die Luftkanalisierungswand (12D, 12L) eine in etwa konstante Dicke zwischen 2 und 10 mm, vorzugsweise zwischen 3 und 5 mm hat.

4. Vorrichtung nach einem der vorangehenden Ansprüche, d a - **durch gekennzeichnet, dass** die Luftkanalisierungswand (12D, 12L) eine Dichte unter 200 kg/m³, vorzugsweise zwischen 20 und 100 kg/m³, hat.

5. Vorrichtung nach einem der vorangehenden Ansprüche, d a - **durch gekennzeichnet, dass** die Luftkanalisierungswand (12D, 12L) eine Druckfestigkeit unter 500 kPa, vorzugsweise zwischen 50 und 200 kPa, hat.

6. Vorrichtung nach einem der vorangehenden Ansprüche, d a - **durch gekennzeichnet, dass** die Luftkanalisierungswand (12D, 12L) eine ebene Gesamtform hat, die durch einen Umriss mit einer in etwa rechteckigen Form begrenzt wird, wobei der Dichtungsvorsprung (18D, 18L) eine geradlinige Gesamtform aufweist, die sich in etwa parallel zu den Längsseiten der Luftkanalisierungswand (12D, 12L) erstreckt.

7. Anlage für die Luftzirkulation in einem Kraftfahrzeug, **dadurch gekennzeichnet, dass** sie eine Luftfiltervorrichtung (10) nach einem der vorangehenden Ansprüche umfasst.

8. Anlage nach Anspruch 7, **dadurch gekennzeichnet, dass** sie einen Fahrgastraum des Fahrzeugs mit klimatisierter oder unklimatisierter Luft versorgt.

9. Vorrichtung (20; 32) zur Herstellung einer Luftfiltervorrichtung nach einem der Ansprüche 1 bis 6 mit einer Auflageplatte (22), die durch eine Auflagefläche (22A) für die Außenfläche (FE) der Luftkanalisierungswand (12D, 12L) begrenzt wird, **dadurch gekennzeichnet, dass** die Auflagefläche (22A) der Auflageplatte (22) eine Eintiefung (24) mit einer mit dem Dichtungsvorsprung (18D, 18L) der Luftkanalisierungswand (12D, 12L) komplementären Form enthält, wobei diese Eintiefung (24) an Mittel (26) angeschlossen ist, die dazu bestimmt sind, ein Vakuum zwischen der Auflagefläche (22A) der Auflageplatte (22) und der Außenfläche (FE) der Luftkanalisierungswand (12D, 12L) zu erzeugen.

10. Vorrichtung (20) nach Anspruch 9, **dadurch gekennzeichnet, dass** sie eine Heizplatte (28) umfasst, die durch eine Kontaktfläche (28A) für den Kontakt mit der Innenfläche (FI) der Luftkanalisierungswand (12D, 12L) begrenzt wird, wobei die Luftkanalisierungswand (12D, 12L) dazu bestimmt ist, zwischen der Auflageplatte (22) und der Heizplatte (28) eingespannt zu werden, wobei die Kontaktfläche (28A) der Heizplatte (28) einen mit der Eintiefung (24) der Auflagefläche (22A) der Auflageplatte (22) in etwa komplementären Vorsprung (30) zur Formung des Dichtungsvorsprungs (18D, 18L) der Luftkanalisierungswand (12D, 12L) umfasst.

11. Vorrichtung (32) nach Anspruch 9, **dadurch gekennzeichnet, dass** sie eine Lampe (34), insbesondere eine Neonlampe, umfasst, die eine Infrarotstrahlung abgibt, die zur Erwärmung der Innenfläche (FI) der Luftkanalisierungswand (12D, 12L) bestimmt ist.

12. Verfahren zur Herstellung einer Luftfiltervorrichtung nach einem der Ansprüche 1 bis 6, durchgeführt durch eine Herstellungsvorrichtung (20; 32) nach Anspruch 10 oder 11, **dadurch gekennzeichnet, dass:**
- die Innenfläche (FI) der Luftkanalisierungswand (12D, 12L) auf eine Temperatur zwischen 240 und 300°C erhitzt wird,
- örtlich ein Vakuum zwischen der Auflagefläche (22A) der Auflageplatte (22) und der Außenfläche (FE) der Luftkanalisierungswand (12D, 12L) erzeugt wird, um den Dichtungsvorsprung (18D, 18L) zu bilden.

13. Verfahren nach Anspruch 12, **dadurch gekennzeichnet, dass** das zwischen der Auflagefläche (22A) der Auflageplatte (22) und der Außenfläche (FE) der Luftkanalisierungswand (12D, 12L) erzeugte Vakuum -80 kPa erreichen bzw. übersteigen kann.

14. Verfahren nach Anspruch 12 oder 13, durchgeführt durch eine Herstellungsvorrichtung (20) nach Anspruch 10, **dadurch gekennzeichnet, dass** die Innenfläche (FI) der Luftkanalisierungswand (12D, 12L) durch Kontakt mit der Heizplatte (28) während einer Dauer von 2 bis 7 Sekunden erhitzt wird.

15. Verfahren nach Anspruch 12 oder 13, durchgeführt durch eine Herstellungsvorrichtung (32) zur Herstellung einer Luftfiltervorrichtung (10) nach Anspruch 6, **dadurch gekennzeichnet, dass** die durch die Lampe (34) abgegebene Infrarotstrahlung zur Innenfläche (FI) der Luftkanalisierungswand (12D, 12L) während einer Dauer von 1 bis 4 Sekunden und mit einer Leistung abgestrahlt wird, die so bemessen ist, dass die auf der Innenfläche (FI) der Luftkanalisierungswand (12D, 12L) auftreffende Leistung zwischen 60 und 200 W/cm Länge des Dichtungsvorsprungs (18D, 18L), vorzugsweise gleich 120 W/cm Länge des Dichtungsvorsprungs (18D, 18L) ausfällt.
